# EUROPÄISCHE PATENTSCHRIFT

(11) **EP 2 230 063 B1**
(45) Veröffentlichungstag und Bekanntmachung des Hinweises auf die Patenterteilung: **05.06.2013**
(21) Anmeldenummer: 10157167.7
(22) Anmeldetag: 22.03.2010
(51) Int. Cl.: B29C 45/84, F16P 3/12, B29C 45/64

(54) **Begehbarer Sicherheitsboden**
Accessible safety floor
Sol de sécurité accessible

(30) Priorität: 20.03.2009 DE 102009014248
(43) Veröffentlichungstag der Anmeldung: 22.09.2010
(73) Patentinhaber: Sumitomo (SHI) Demag Plastics Machinery GmbH, 90571 Schwaig (DE)
(72) Erfinder: Armbrüster, Manfred, Dipl.-Ing., 90571 Schwaig (DE)
(74) Vertreter: Hübner, Gerd

(56) Entgegenhaltungen:
- EP-A1- 0 253 000
- WO-A1-95/13906
- DE-A1- 1 807 261
- DE-A1- 3 411 353
- DE-A1- 3 420 840
- DE-A1- 3 715 871
- DE-A1-102005 033 223
- DE-A1-102008 008 449
- DE-B3-102006 019 595
- DE-U1- 9 312 840

## Beschreibung

Die Erfindung betrifft einen begehbaren Sicherheitsboden in einem sicherheitsrelevanten Maschinenbereich, insbesondere in der Formschließzone einer Kunststoff-Spritzgießmaschine, sowie einen Nachrüstsatz für einen derartigen Sicherheitsboden.

Kunststoff-Spritzgießmaschinen sind seit langem in der kunststoffverarbeitenden Industrie bekannt. Derartige Maschinen weisen eine Schließeinheit mit einer festen Aufspannplatte und einer beweglichen Aufspannplatte auf, die während eines Kunststoff-Spritzgießprozesses mit einer Schließkraft von üblicherweise bis zu mehreren 1.000 t gegen die feste Aufspannplatte gedrückt wird. Zur Entnahme eines Kunststoff-Spritzgießprodukts, für Wartungs- und/oder Umrüstvorgänge wird die Spritzgießform geöffnet, indem die bewegliche Aufspannplatte auf einem Maschinenbett von der festen Aufspannplatte weg bewegt wird. In diesem geöffneten Zustand wird die Formschließzone der Kunststoff-Spritzgießmaschine begehbar. Der Bereich zwischen den beiden Aufspannplatten der geöffneten Formschließzone ist ein sicherheitsrelevanter Maschinenbereich, da ein unkontrolliertes, unvorhergesehenes Schließen der Maschine zu lebensgefährlichen Verletzungen einer sich in der Formschließzone aufhaltenden Person oder zur Beschädigung bzw. Zerstörung von sich dort befindlichen Gegenständen führen kann.

Durch offenkundige Vorbenutzung ist bekannt, dass in das Maschinenbett einer Kunststoff-Spritzgießmaschine im Bereich der Formschließzone ein Trittschutz integriert ist, bei dessen Belasten mit einer ausreichenden Masse, insbesondere durch Betreten eines Maschinenbedieners, eine Bewegung der beweglichen Aufspannplatte verhindert bzw. unterbrochen wird. Der Trittschutz findet in der Regel Anwendung bei Kunststoff-Spritzgießmaschinen mit einer Schließkraft von mehr als 1.000 t. Aus der DE 34 20 840 A1 ist ein begehbarer Sicherheitsboden für einen sicherheitsrelevanten Maschinenbereich bekannt mit einer unbeweglichen Unterlage, und einer darauf gelagerten, begehbaren Platte, die über mehrere Kraftmessgeber auf der Unterlage abgestützt ist.

Weitere Sicherheitseinrichtungen sind bekannt aus der DE 34 11 353 A1, der DE 37 15 871 A1, der DE 18 07 261 A1, der DE 10 2006 019 595 B3, der EP 0 253 000 A1, der DE 93 12 840 U1, der DE 10 2005 033 223 A1, der WO 95/13906 A1 und der DE 10 2008 008 449 A1.

Üblicherweise ist der Trittschutz in Form von Sicherheits-Kontakhnatten ausgeführt, wobei ein Signal zur Verhinderung bzw. Unterbrechung einer Bewegung der beweglichen Aufspannplatte durch Betreten der Matte ausgelöst wird. Dazu werden in den Matten innenliegende Flächenschalter verwendet. Ein Schutz der Sicherheitskontaktmatten vor mechanischer Beschädigung kann durch zusätzlich aufgebrachte Abdeckbleche, die gegen Verschieben gesichert sein müssen, erreicht werden. Nachteilig ist, dass die Gestaltung einer Trittschutzfläche mittels Sicherheitskontaktmatten nur individuell auf das Maschinenbett einer Kunststoff-Spritzgießmaschine angepasst möglich ist, da die Matten in der entsprechenden Größe hergestellt werden müssen, so dass ein Wechsel eines Trittschutzes zwischen zwei Maschinen mit variierender Maschinenbett-Geometrie nicht möglich ist. Weiterhin sind die Sicherheitskontaktmatten störanfällig bei Fremdkörper- bzw. Wassereinwirkung und bedürfen darüber hinaus einer sehr sorgfältigen Montage, da ein Knicken oder Biegen der Matten zur Beschädigung der innenliegenden Flächenschalter führen kann. Wird durch unsachgemäße Montage der Matten keine ebene Auflagefläche erzeugt, können Messfehler durch Nichterkennen eines Betretens bzw. Auslösen eines Signals bei Nichtbetreten auftreten. Darüber hinaus verursachen nicht verwendete Sicherheitskontaktmatten aufgrund der Notwendigkeit einer ebenen Lagerung und dem damit verbundenen erhöhten Lagerflächenbedarf hohe Lagerhaltungskosten. Insgesamt handelt es sich bei der Realisierung des Trittschutzes durch Sicherheitskontaktmatten um eine teuere und störanfällige Lösung.

Der Erfindung liegt daher die Aufgabe zugrunde, einen begehbaren Sicherheitsboden in einem sicherheitsrelevanten Maschinenbereich, insbesondere in der Formschließzone einer Kunststoff-Spritzgießmaschine, sowie einen Nachrüstsatz für einen derartigen Sicherheitsboden kostengünstig und robust gegenüber den Einsatzbedingungen des Betriebs einer Kunststoff-Spritzgießmaschine zu gestalten.

Diese Aufgabe wird hinsichtlich des Sicherheitsbodens durch die Merkmale des Anspruchs 1 sowie hinsichtlich des Nachrüstsatzes durch die Merkmale des Anspruchs 13 gelöst. Der Kern der Erfindung besteht darin, dass eine begehbare Bodenplatte über mehrere Punktlager auf einer Bodenbasis in einem sicherheitsrelevanten Maschinenbereich gelagert ist, wobei den Punktlagern mindestens ein Gewichtssensor zur Erfassung eines auf der Bodenplatte wirkenden Gewichts zugeordnet ist. Die verwendeten Punktlager und Gewichtssensoren erlauben eine einfache konstruktive Anbindung der Bodenplatte an die Bodenbasis der Maschine, wobei die Trittschutz-Rahmengeometrie durch entsprechenden Zuschnitt der Bodenplatte frei und kostengünstig gestaltbar ist. Mit dem erfindungsgemäßen Sicherheitsboden ist es weiterhin möglich, nicht-ebene Bodenplatten zu gestalten, um diese beispielsweise an Unebenheiten der Bodenbasis anzupassen oder Stufen vorzusehen. Ein durch Sicherheitskontaktmatten derartig gestalteter Sicherheitsboden müsste aufwendig hergestellt und abgesichert werden und wäre damit kostenintensiv.

Insbesondere ein Wechsel des erfindungsgemäßen Sicherheitsbodens zwischen zwei Maschinen erfolgt durch schnelles Umrüsten der einzelnen Punktlager und Gewichtssensoren sowie durch Tausch der Bodenplatten. Die Punktlager und die Gewichtssensoren sind unempfindlich gegenüber Fremdkörpereinwirkungen und Druckwasser und bilden damit die Voraussetzung für eine robuste Ausführung des Sicherheitsbodens. Ein derartiger Sicherheitsboden ist darüber hinaus kostengünstig herstellbar, da die verwendeten Komponenten, wie Punktlager, Gewichtssensoren und einfaches Flachmaterial-Halbzeug für die begehbare Bodenplatte auf dem Markt im Vergleich zu Sicherheitskontaktmatten kostengünstig verfügbar sind. Aufgrund der kompakten Bauweise und - da ein Gewichtssensortyp in mehreren verschiedenen Maschinentypen anwendbar ist - der Reduzierung der Anzahl der vorzuhaltenden Gewichtssensoren können die in der Produktion benötigte Lagerfläche und damit die verursachten Lagerkosten reduziert werden. Weiterhin zeigt der erfindungsgemäße Sicherheitsboden nahezu keinen Verschleiß und zeichnet sich deshalb durch eine hohe Lebensdauer aus.

Weitere vorteilhafte Ausgestaltungen der Erfindung ergeben sich aus den Unteransprüchen, deren Merkmale und Einzelheiten in der nachfolgenden Beschreibung anhand der Zeichnung näher erläutert werden. Es zeigen:
- Fig. 1: eine perspektivische Ansicht einer Kunststoff-Spritzgießmaschine mit einem Sicherheitsboden im Formschließbereich,
- Fig. 2: eine Draufsicht einer ersten Ausführungsform des erfindungsgemäßen Sicherheitsboden,
- Fig. 3: einen Querschnitt des in Fig. 2 dargestellten Sicherheitsbodens mit zusätzlicher Auswerteelektronik,
- Fig. 4: einen zu Fig. 3 ähnlichen Längsschnitt einer weiteren Ausführungsform des Sicherheitsbodens und
- Fig. 5: eine Detail-Seitenansicht eines in Fig. 4 dargestellten Gewichtssensors.

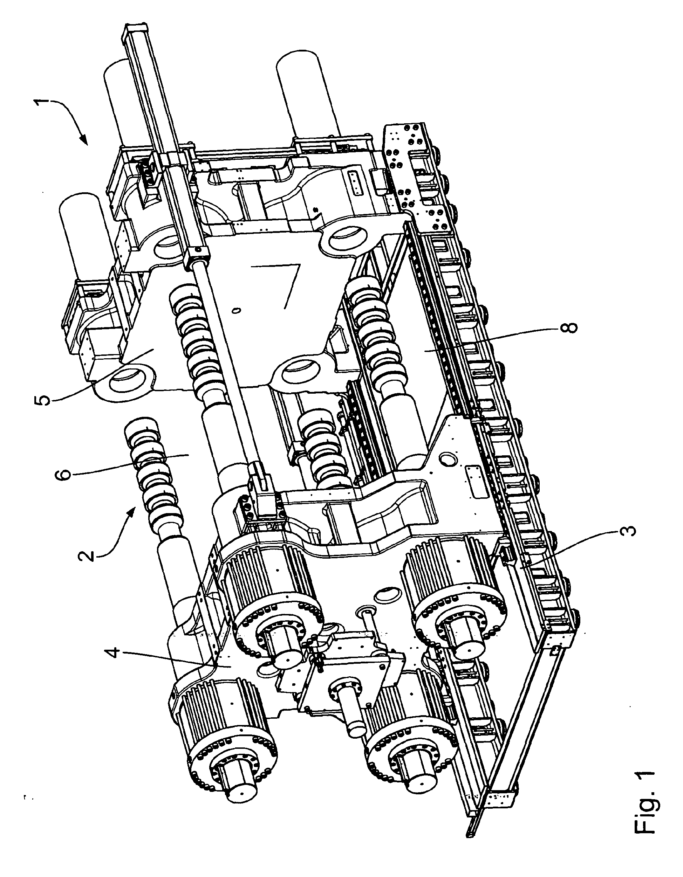

Eine in der Fig. 1 dargestellte Kunststoff-Spritzgießmaschine 1 weist eine Schließeinheit 2 und ein Maschinenbett 3 auf. Die Schließeinheit 2 befindet sich in einer geöffneten Stellung, wobei eine bewegliche Aufspannplatte 4 gegenüber einer festen Aufspannplatte 5 auf dem Maschinenbett 3 verschiebbar angebracht ist. Die beiden an den Aufspannplatten 4, 5 sitzenden Formwerkzeuge sind der Übersichtlichkeit halber nicht dargestellt.

Der Bereich zwischen den Aufspannplatten 4, 5 der geöffneten Schließeinheit 2 wird als Formschließzone 6 bezeichnet und stellt einen sicherheitsrelevanten Maschinenbereich dar, da durch unkontrolliertes Schließen der Schließeinheit 2 eine Gefährdung für einen sich in der Formschließzone 6 aufhaltenden Maschinenbediener oder in der Formschließzone 6 befindliche Gegenstände besteht.

Zur Vermeidung eines unkontrollierten Schließens der Schließeinheit 2 ist im Maschinenbett 3 ein Sicherheitsboden 8 als Trittschutz vorgesehen. Durch Betreten des Sicherheitsbodens 8 wird in noch zu erläuternder Weise ein Signal ausgelöst, das zu einer Unterbrechung des Steuerkreises für die Schließeinheit 2 führt und somit eine Bewegung der beweglichen Aufspannplatte 4 verhindert bzw. unterbricht.

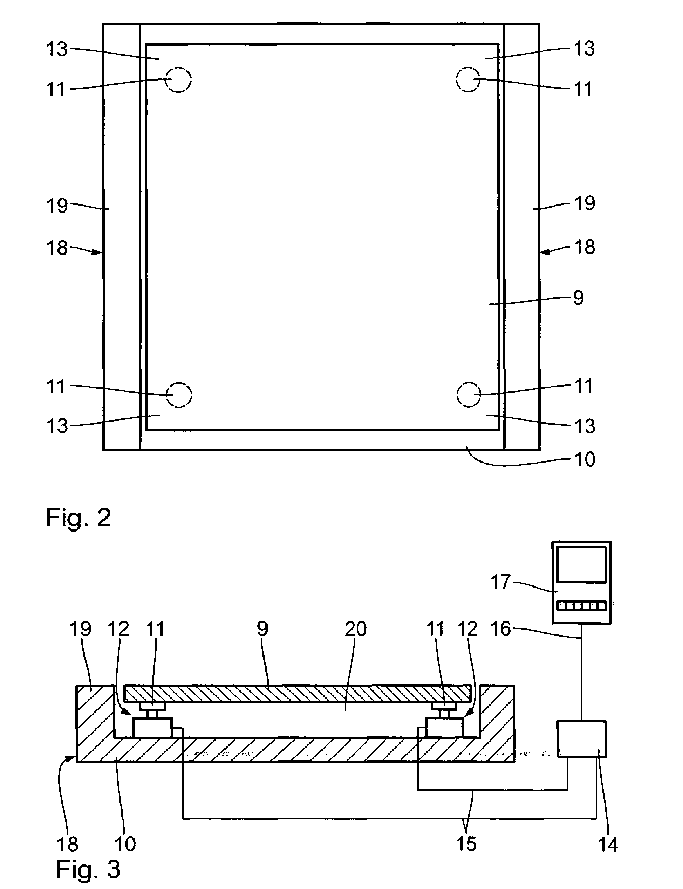

Die Fig. 2 und 3 zeigen eine Ausführungsform des erfindungsgemäßen Sicherheitsbodens 8 mit einer begehbaren Bodenplatte 9, die auf einer Bodenbasis 10 gelagert ist. Die Bodenbasis 10 wird dabei insbesondere von dem Maschinenbett einer Kunststoff-Spritzgießmaschine gebildet. Für die Bodenplatte 9 können Blechzuschnitte aus Aluminium oder Edelstahl, insbesondere in der Ausführung als Riffelbleche, verwendet werden. Selbstverständlich ist auch die Verwendung anderer Blechwerkstoffe denkbar.

Die Bodenplatte 9 ist über vier Punktlager 11 auf der Bodenbasis 10 gelagert, wobei den Punktlagern 11 jeweils ein Gewichtssensor zur Erfassung eines auf der Bodenplatte 9 wirkenden Gewichts zugeordnet ist. Die verwendeten Gewichtssensoren sind beispielsweise piezoelektrische Drucksensoren 12. Es ist denkbar, dass weniger Gewichtssensoren, jedoch mindestens einer verwendet wird. Bei der dargestellten Ausführungsform wird eine rechteckige Bodenplatte 9 verwendet, wobei die vier Punktlager 11 jeweils in einem Eckenbereich 13 der Bodenplatte 9 angeordnet sind. Es ist möglich, die Anzahl der Punktlager 11 zu variieren, wobei in der Regel mindestens drei Punktlager 11 notwendig sind, um die Bodenplatte 9 sicher zu lagern.

Die Bodenplatte 9 muss nicht eben ausgebildet, sondern kann insbesondere Stufen aufweisen oder beispielsweise an Unebenheiten der Bodenbasis 10 angepasst sein. Durch die freie Gestaltung der Bodenplatte 9 kann eine individuelle Anpassung des Sicherheitsbodens 8 an eine Kunststoff-Spritzgießmaschine erfolgen.

Der Sicherheitsboden 8 weist außerdem eine Auswerte-Einheit 14 auf, die über Signalverbindungen 15 mit den Gewichtssensoren in Verbindung steht. Über eine weitere Signalverbindung 16 ist die Auswerte-Einheit 14 an eine Maschinensteuerung 17 der Kunststoff-Spritzgießmaschine angeschlossen, so dass bei Betreten der Bodenplatte 9 ein Signal von mindestens einem der Gewichtssensoren zu der Auswerte-Einheit 14 übermittelt wird und von dort zur Maschinensteuerung 17 zur Unterbrechung bzw. Verhinderung der Bewegung der beweglichen Aufspannplatte weitergeleitet wird.

Die rechteckige Bodenbasis 10 weist an zwei gegenüberliegenden Kanten 18 jeweils einen vertikal nach oben ragenden Begrenzungssteg 19 auf. Von der Bodenbasis 10, den seitlichen Begrenzungsstegen 19 und der Bodenplatte 9 wird ein Stauraum 20 umgeben, innerhalb dessen die Gewichtssensoren angeordnet sind. Es ist weiterhin möglich, die Signalverbindungen 15 und/oder die Auswerte-Einheit 14 in dem Stauraum 20 unterzubringen. Als zusätzlicher Schutz der Gewichtssensoren gegenüber Einwirkungen von Fremdkörpern und/oder Druckwasser können die Gewichtssensoren in einem nicht dargestellten flüssigkeitsdichten Schutzbehälter gekapselt angeordnet sein.

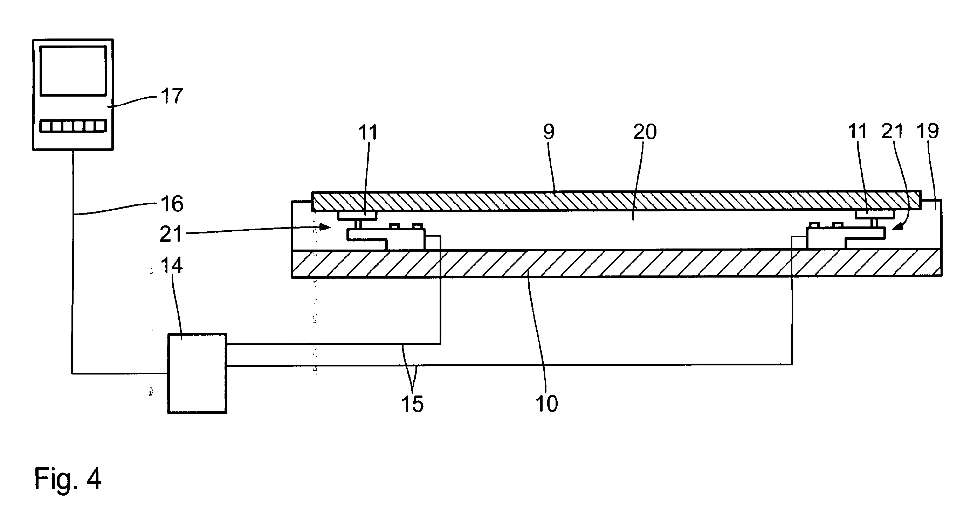

Fig. 4 zeigt einen dem in den Fig. 2 und 3 dargestellten ähnlichen Sicherheitsboden, der sich lediglich durch die Ausführung der Gewichtssensoren als Kraftaufnehmer, insbesondere als Wägezellen 21, unterscheidet.

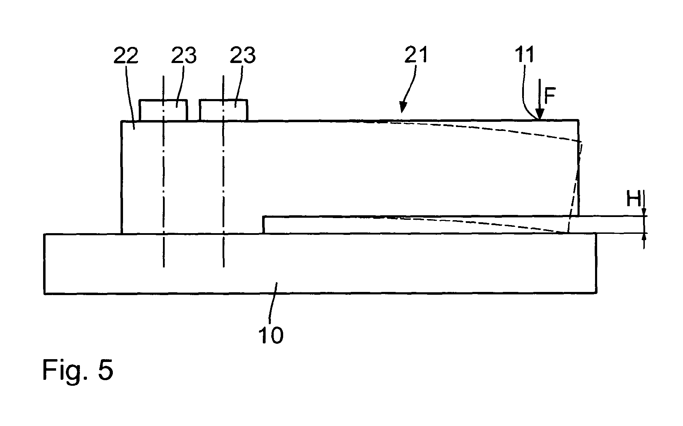

Anhand der in Fig. 5 dargestellten Wägezelle 21 wird deren integrierte mechanische Überlastsicherung erläutert. Die Wägezelle 21 ist als L-förmiger Kragarm 22 ausgebildet und durch zwei Schrauben 23 auf der Bodenbasis 10 befestigt. Im unbelasteten Zustand ist der Kragarm 22 in einem Abstand H von der Bodenbasis 10 angeordnet. Aus einer Belastung der Wägezelle 21 mit einer äußere Kraft F im Punktlager 11 resultiert eine Durchbiegung des Kragarms 22, die in Fig. 5 gestrichelt dargestellt ist. Durch den Abstand H ist die maximale Durchbiegung des Kragarms 22 durch Aufliegen des Kragarms 22 auf der Bodenbasis 10 festgelegt. Dabei kann der Abstand H derart gewählt werden, dass ein mechanisches Versagen des Wägezelle 21 vermieden wird.

Mittels einer nicht dargestellten Überwachungs-Einheit wird die Überwachung und Ausfallerkennung eines Gewichtssensors ermöglicht, so dass auch ein teilweiser Ausfall des Sicherheitsbodens rechtzeitig erkennbar ist. Geeichte Gewichtssensoren weisen eine Messgenauigkeit derart auf, dass eine Minimalbelastung von 0,25 kg pro Sensor bestimmbar ist. Bei Verwendung von vier Gewichtssensoren in den Eckenbereichen 13 der rechteckigen Bodenplatte 9 ist eine Minimalbelastung der Bodenplatte 9 mit einer Masse von 1 kg quantitativ bestimmbar. Es ist weiterhin möglich, eine Belastung von weniger als 0,25 kg pro Gewichtssensor außerhalb des geeichten Messbereichs des Gewichtssensors qualitativ zu erfassen. Zwar ist damit eine quantitative Gewichtserfassung nicht möglich, jedoch sind verschiedene Zusatzfunktionen realisierbar, wie die Erkennung von Ausschussteilen, Fremdkörpern und/oder Verschmutzung, die auf den Sicherheitsboden einwirken können. Für diese Zusatzfunktionen ist nämlich das tatsächliche Gewicht von Ausschussteilen, Fremdkörpern und/oder Verschmutzungen unerheblich.

Aufgrund des modularen Aufbaus des erfindungsgemäßen Sicherheitsbodens 8 sowie der freien Gestaltung der Bodenplatte 9 kann der erfindungsgemäße Sicherheitsboden als Nachrüstsatz in einem sicherheitsrelevanten Maschinenbereich, insbesondere in der Formschließzone einer Kunststoff-Spritzgießmaschine, eingebaut werden. Dafür weist der Nachrüstsatz eine begehbare Bodenplatte 9 auf, die über mehrere Punktlager 11 lagerbar ist, wobei den Punktlagern 11 mindestens ein Gewichtssensor zur Erfassung eines auf der Bodenplatte 9 wirkenden Gewichts zugeordnet ist.

## Patentansprüche

1. Begehbarer Sicherheitsboden in einem sicherheitsrelevanten Maschinenbereich, insbesondere in der Formschließzone einer Kunststoff-Spritzgießmaschine, umfassend
- eine Bodenbasis (10)
- eine darauf gelagerte, begehbare Bodenplatte (9) und
- eine Wägezelle (21) als Gewichtssensor, wobei
- die Bodenplatte (9) über mehrere Punktlager (11) auf der Bodenbasis (10) gelagert ist, wobei den Punktlagern (11) mindestens ein Gewichtssensor zur Erfassung eines auf der Bodenplatte (9) wirkenden Gewichts zugeordnet ist,
**dadurch gekennzeichnet, dass** die Wägezelle (21) eine integrierte mechanische Überlastsicherung aufweist.

2. Sicherheitsboden gemäß Anspruch 1, **gekennzeichnet durch** einen Drucksensor (12) als Gewichtssensor.

3. Sicherheitsboden gemäß einem der vorangehenden Ansprüche, **gekennzeichnet durch** eine Überwachungs-Einheit zur Überwachung und Ausfallerkennung eines Gewichtssensors.

4. Sicherheitsboden gemäß einem der vorangehenden Ansprüche, **dadurch gekennzeichnet, dass** die Bodenplatte (9) nicht eben ist, insbesondere mindestens eine Stufe aufweist.

5. Sicherheitsboden gemäß einem der vorangehenden Ansprüche, **dadurch gekennzeichnet, dass** jeweils eines von vier Punktauflagern (11) in einem Eckenbereich (13) der Bodenplatte (9) angeordnet ist.

6. Sicherheitsboden gemäß einem der vorangehenden Ansprüche, **gekennzeichnet durch** Gewichtssensoren mit einer Messgenauigkeit derart, dass eine Minimalbelastung der Bodenplatte (9) mit einer Masse von 1 kg insgesamt und von 0,25 kg einzeln quantitativ bestimmbar ist.

7. Sicherheitsboden gemäß Anspruch 6, **dadurch gekennzeichnet, dass** die Gewichtssensoren eine Messgenauigkeit derart aufweisen, dass eine Belastung der Bodenplatte (9) mit einer Masse von weniger als 0,25 kg qualitativ erfassbar ist.

8. Sicherheitsboden gemäß einem der vorangehenden Ansprüche, **dadurch gekennzeichnet, dass** die Bodenbasis (10) ein Maschinenbett (3) der Kunststoff-Spritzgießmaschine (1) ist.

9. Sicherheitsboden gemäß einem der vorangehenden Ansprüche, **gekennzeichnet durch** eine mit den Gewichtssensoren verbundene Auswerte-Einheit (14) zur Übermittlung eines Signals an eine Maschinensteuerung (17) der Kunststoff-Spritzgießmaschine (1).

10. Sicherheitsboden gemäß einem der vorangehenden Ansprüche, **gekennzeichnet durch** einen von der Bodenbasis (10) und der Bodenplatte (9) begrenzten Stauraum (20).

11. Sicherheitsboden gemäß der Ansprüche 9 und 10, **dadurch gekennzeichnet, dass** die Auswerte-Einheit (14) in dem Stauraum (20) angeordnet ist.

12. Sicherheitsboden gemäß einem der Ansprüche 10 oder 11, **dadurch gekennzeichnet, dass** die Gewichtssensoren in dem Stauraum (20) angeordnet sind, wobei der Stauraum (20) durch einen flüssigkeitsdichten Schutzbehälter gekapselt ist.

13. Nachrüstsatz für einen Sicherheitsboden gemäß einem der vorangehenden Ansprüche zum Einbau in einen sicherheitsrelevanten Maschinenbereich, insbesondere in die Formschließzone einer Kunststoff-Spritzgießmaschine, wobei der Nachrüstsatz eine gelagerte, begehbare Bodenplatte (9) aufweist,
wobei die Bodenplatte (9) über mehrere Punktlager (11) lagerbar ist, wobei den Punktlagern (11) mindestens eine Wägezelle (21) als Gewichtssensor zur Erfassung eines auf der Bodenplatte (9) wirkenden Gewichts zugeordnet ist,
**dadurch gekennzeichnet, dass**
die Wägezelle (21) eine integrierte mechanische Überlastsicherung aufweist.

## Claims

1. Accessible safety floor in a safety-relevant machine area, in particular in the mould closing area of a plastic injection moulding machine, comprising
- a floor base (10)
- an accessible base plate (9) mounted thereon and
- a load cell (21) as a weight sensor, wherein
- the base plate (9) is mounted on a plurality of point supports (11) on the floor base (10), wherein at least one weight sensor for detecting a weight acting on the base plate (9) is assigned to the point supports (11),
**characterised in that** the load cell (21) comprises an integrated mechanical overload protection.

2. Safety floor according to claim 1, **characterised by** a pressure sensor (12) as a weight sensor.

3. Safety floor according to one of the preceding claims, **characterised by** a monitoring unit for monitoring and identifying the failure of a weight sensor.

4. Safety floor according to one of the preceding claims, **characterised in that** the base plate (9) is not flat, in particular comprises at least one step.

5. Safety floor according to one of the preceding claims, **characterised in that** one of four point supports (11) is arranged respectively in a corner area (13) of the base plate (9).

6. Safety floor according to one of the preceding claims, **characterised by** weight sensors with a measurement precision such that a minimum loading of the base plate (9) with a mass of 1 kg overall and 0.25kg individually can be determined quantitatively.

7. Safety floor according to claim 6, **characterised in that** the weight sensors have measurement precision such that a loading of the base plate (9) with a mass of less than 0.25 kg can be determined qualitatively.

8. Safety floor according to one of the preceding claims, **characterised in that** the floor base (10) is a machine bed (3) of the plastic injection moulding machine (1).

9. Safety floor according to one of the preceding claims, **characterised by** an evaluation unit (14) connected to the weight sensors for transmitting a signal to a machine control (17) of the plastic injection moulding machine (1).

10. Safety floor according to one of the preceding claims, **characterised by** a storage space (20) delimited by the floor base (10) and the base plate (9).

11. Safety floor according to claims 9 and 10, **characterised in that** the evaluation unit (14) is arranged in the storage space (20).

12. Safety floor according to one of the claims 10 or 11, **characterised in that** the weight sensors are arranged in the storage space (20), wherein the storage space (20) is enclosed by a fluid-tight protection container.

13. Add-on kit for a safety floor according to one of the preceding claims for installation in a safety-relevant machine area, in particular in the mould closing area of a plastic injection moulding machine, wherein the add-on kit comprises a mounted, accessible base plate (9),
wherein the base plate (9) can be mounted on a plurality of point supports (11), wherein at least one load cell (21), as a weight sensor for determining a weight acting on the base plate (9), is assigned to the point supports (11), **characterised in that** the load cell (21) comprises an integrated mechanical overload protection.

## Revendications

1. Sol de sécurité accessible dans un périmètre relevant de la sécurité de machines, en particulier dans la zone de mise en forme d'une presse à injection de matière synthétique, comprenant
- une base de sol (10)
- un plateau de sol (9), accessible, disposé dessus, et
- une cellule de pesée (21) servant de capteur de poids, où
- le plateau de sol (9) est disposé sur la base de sol (10) par l'intermédiaire de plusieurs points d'appui (11), au moins un capteur de poids pour l'évaluation d'un poids agissant sur le plateau de sol (9) étant alloué aux points d'appui (11),
**caractérisé en ce que** la cellule de pesée (21) présente une sécurité de surcharge mécanique intégrée.

2. Sol de sécurité selon la revendication 1 **caractérisé par** un capteur de pression (12) servant de capteur de poids.

3. Sol de sécurité selon l'une des revendications précédentes **caractérisé par** une unité de surveillance pour la surveillance et la reconnaissance d'une défaillance d'un capteur de poids.

4. Sol de sécurité selon l'une des revendications précédentes **caractérisé en ce que** le plateau de sol (9) n'est pas plan, présente en particulier au moins une marche.

5. Sol de sécurité selon l'une des revendications précédentes **caractérisé en ce que**, chaque fois, l'un des quatre points d'appui (11) est disposé dans la partie en angle (13) du plateau de sol (9).

6. Sol de sécurité selon l'une des revendications précédentes **caractérisé par** des capteurs de poids ayant une précision de mesure telle qu'une charge minimale du plateau de sol (9) de 1 kg au total, et de 0,25 kg unitairement, peut être déterminée quantitativement.

7. Sol de sécurité selon la revendication 6 **caractérisé en ce que** les capteurs de poids présentent une précision de mesure telle qu'une charge du plateau de sol (9) possédant une masse de moins de 0,25 kg peut être évaluée qualitativement.

8. Sol de sécurité selon l'une des revendications précédentes **caractérisé en ce que** la base du sol (10) est constituée d'un bâti de machine (3) de la presse à injection de matière synthétique (1).

9. Sol de sécurité selon l'une des revendications précédentes **caractérisé par** une unité d'évaluation (14) reliée aux capteurs de poids pour la transmission d'un signal à une commande de machine (17) de la presse à injection de matière synthétique (1).

10. Sol de sécurité selon l'une des revendications précédentes **caractérisé par** un espace de stockage (20) délimité par la base de sol (10) et le plateau de sol (9).

11. Sol de sécurité selon l'une des revendications précédentes **caractérisé en ce que** l'unité d'évaluation (14) est logée dans l'espace de stockage (20).

12. Sol de sécurité selon l'une des revendications 10 ou 11 **caractérisé en ce que** les capteurs de poids sont logés dans l'espace de stockage (20), l'espace de stockage (20) étant fermé hermétiquement par un conteneur de protection étanche aux liquides.

13. Equipement complémentaire pour un sol de sécurité selon l'une des revendications précédentes pour l'intégration dans un périmètre relevant de la sécurité de machines, en particulier dans la zone de mise en forme d'une presse à injection de matière synthétique, l'équipement complémentaire comprenant un plateau de sol (9), y étant situé, accessible,
le plateau de sol (9) pouvant être agencé par l'intermédiaire de plusieurs points d'appui (11), au moins une cellule de pesée (21) servant de capteur de poids étant allouée aux points d'appui (11) pour la détermination d'un poids agissant sur le plateau de sol (9),
**caractérisé en ce que**
la cellule de pesée (21) présente une sécurité de surcharge mécanique intégrée.
